(19) Europäisches Patentamt European Patent Office Office européen des brevets

(11) **EP 4 180 399 B1**

(12) **EUROPEAN PATENT SPECIFICATION**

(45) Date of publication and mention of the grant of the patent:
**01.10.2025 Bulletin 2025/40**

(21) Application number: **21906856.6**

(22) Date of filing: **09.11.2021**

(51) International Patent Classification (IPC):
C03C 3/066 (2006.01)    C03C 3/089 (2006.01)
C03C 3/097 (2006.01)    C03C 3/078 (2006.01)
C03B 1/00 (2006.01)    C08K 3/40 (2006.01)
C08L 101/00 (2006.01)    C08L 23/12 (2006.01)
C08L 23/16 (2006.01)    C08L 69/00 (2006.01)
C03C 12/00 (2006.01)    A01N 59/14 (2006.01)
A01N 59/16 (2006.01)    A01P 1/00 (2006.01)
C03C 3/062 (2006.01)

(52) Cooperative Patent Classification (CPC):
(C-Sets available)
C08K 3/40; A01N 59/14; A01N 59/16; A01P 1/00;
C03C 3/062; C03C 3/066; C03C 3/089;
C03C 12/00; C03C 2204/02    (Cont.)

(86) International application number:
**PCT/KR2021/016274**

(87) International publication number:
**WO 2022/131551 (23.06.2022 Gazette 2022/25)**

(54) **ANTIBACTERIAL GLASS COMPOSITION, METHOD FOR PREPARING SAID ANTIBACTERIAL GLASS POWDER, AND HOUSEHOLD ELECTRICAL APPLIANCE COMPRISING SAME**

ANTIBAKTERIELLE GLASZUSAMMENSETZUNG, VERFAHREN ZUR HERSTELLUNG DES ANTIBAKTERIELLEN GLASPULVERS UND ELEKTRISCHES HAUSHALTSGERÄT DAMIT

COMPOSITION DE VERRE ANTIBACTÉRIEN, PROCÉDÉ DE PRÉPARATION DE LADITE POUDRE DE VERRE ANTIBACTÉRIEN ET APPAREIL ÉLECTROMÉNAGER COMPRENANT LADITE COMPOSITION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2020 KR 20200175660**

(43) Date of publication of application:
**17.05.2023 Bulletin 2023/20**

(73) Proprietor: **LG Electronics Inc.**
**Seoul 07336 (KR)**

(72) Inventors:
• **KIM, Daesung**
**Seoul 08592 (KR)**
• **KIM, Namjin**
**Seoul 08592 (KR)**
• **KIM, Young Seok**
**Seoul 08592 (KR)**

(74) Representative: **Vossius & Partner**
**Patentanwälte Rechtsanwälte mbB**
**Siebertstraße 3**
**81675 München (DE)**

(56) References cited:
JP-A- 2002 037 643    JP-A- 2005 500 972
JP-A- 2006 520 311    JP-A- 2014 005 194
JP-A- H11 228 173    KR-A- 20160 124 193
US-A- 4 098 610    US-B2- 10 343 952

(52) Cooperative Patent Classification (CPC): (Cont.)

C-Sets
**A01N 59/14, A01N 59/16, A01N 59/00, A01N 59/16;**
**A01N 59/16, A01N 59/00, A01N 59/16;**
**C08K 3/40, C08L 23/12**

## Description

## BACKGROUND

**[Technical Field]**

The present disclosure relates to an antibacterial glass composite and method of manufacturing antibacterial glass powder using the same and home appliance including the same.

**[Background Art]**

Microorganisms such as germs, fungi and bacteria are ubiquitous in our living spaces (e.g., water purifiers, refrigerators, ovens and washing machines). If these microbes get into our bodies, they cause life-threatening infections. Accordingly, there is a need for an antibacterial glass composite that is capable of controlling the spread of microorganisms in household items such as water purifiers, refrigerators, ovens and washing machines.

Among the parts where plastic injection molding is used in these home appliances, bacteria and mold grow in some parts exposed to moisture, thereby causing problems in appearance or use environment.

Bacterial inhabiting home appliances are very diverse, and main stains may be different for each part, but the parts exposed to moisture are generally more likely to inhabit Pseudomonas aeruginosa.

Accordingly, antibacterial agents must have antibacterial performance against these strains. In addition, such antibacterial agents must be strictly selected from materials with low toxicity to the human body and the environment, that is, materials with durability against high temperatures.

The antibacterial agents can be broadly divided into inorganic and organic antibacterial agents. The organic antibacterial agent exhibits excellent antibacterial performance because it expresses antibacterial activity against bacterial by eluting a material with antibacterial performance toward a surface by water. However, durability might be reduced when the organic antibacterial agent is applied to a washing machine. In addition, the organic antibacterial agent recently raised concerns about the harmfulness of the eluted material to the human body and the environment, and there is a risk of decomposition during the injection process of the organic antibacterial agent due to its low decomposition temperature.

The inorganic antibacterial agents may have significantly lower elution properties than the organic antibacterial agents, and may secure durability against high temperatures. However, there might be a problem of interfacial wettability with a plastic injection molding. Since Ag is used as an antibacterial material in most cases, its high price limit the application.

Conventional non-elution antibacterial glass may not mean that the entire glass is non-elution but mean that glass composed of a water-insoluble glass properties and icons or crystalline components eluted for the purpose of antibacterial properties.

As a result, in order to express antibacterial activity, ions or crystal phases expressing antibacterial activity should be eluted. However, the conventional elution antibacterial glass is difficult to exhibit long-term durability and has limits in safety when applied to parts that come into contact with drinking water.

US10343952B2 discloses an antibacterial glaze comprising $SiO_2$, $B_2O_3$, $P_2O_5$, $Na_2O$, $K_2O$, CaO, MgO, ZnO and $SnO_2$.

JP2002037643A discloses anti-bacterial glass compositions comprising ZnO and $SiO_2$ that are meant to be added to composite resin products.

[Cited Patent Reference]

[Cited Document 1] Korean Patent Publication No. 10-2005-0022510 (published on March 8th, 2005)

**[Description of Disclosure]**

**[Technical Problems]**

Accordingly, an object of the present disclosure is to address the above-noted and other problems and to provide an antibacterial glass composition that exhibits an antibacterial activity lasting permanently even if glass does not react with water at all, unlike the conventional elution mechanism, a method of manufacturing antibacterial glass powder using the same and a home appliance including the same.

Further, another object of the present disclosure is to provide an antibacterial glass composition that forms a strong glass structure not eluting in water by strictly controlling each component of a glass composition and participating Zn and Sn ions exhibiting antibacterial performance in a network formation structure, thereby exhibiting antibacterial activity without being eluted in water by controlling a surface charge of glass, a method of manufacturing antibacterial glass powder using the same and a home appliance including the same.

Still further, a further object of the present disclosure is to provide an antibacterial glass composition that exhibits an excellent effect in preventing contamination of bacteria and mold, when used as a coating agent for a group of parts coming into contact with driving water by strictly controlling each component of a glass composition and its component ratio, a method of manufacturing antibacterial glass powder using the same and a home appliance including the same.

Aspects according to the present disclosure are not limited to the above ones, and other aspects and advantages that are not mentioned above can be clearly understood from the following description and can be more clearly understood from the embodiments set forth herein. Additionally, the aspects and advantages in the present disclosure can be realized via means and combinations thereof that are described in the appended claims.

[Technical Solutions]

To solve the above technical problems, an antibacterial glass composition, a method of manufacturing antibacterial glass powder using the same and a home appliance including the same according to the present disclosure may control Zn and Sn ions eluted to realize an antibacterial function to perform network formation by using the content ratio of a modifying oxide and a network-forming oxide, thereby securing both antibacterial activity and water resistance.

In addition, the antibacterial glass composition, the method of manufacturing antibacterial glass powder using the same and the home appliance including the same according to the present disclosure may control the metal ions in glass to allow a surface charge of glass, that is, a zeta potential to have a positive charge, so that the positive charge may attract and kill negatively charged bacteria by creating a charged atmosphere in which bacterial cannot grow.

As a result, in the antibacterial glass composition, a method of manufacturing antibacterial glass powder using the same and a home appliance including the same according to the present disclosure, the antibacterial glass composition may be antibacterial agents exhibiting non-dissolving properties, and thus effective in preventing contamination of bacteria and mold, when used as a coating agent for a group of parts coming into contact with driving water.

To this end, the antibacterial glass composition may include 26 to 50 wt% of $SiO_2$; 0.5 to 4 wt% of at least one of $B_2O_3$ and $P_2O_5$; 15 to 27 wt% of at least one of $Na_2O$ and $K_2O$; 3 to 20 wt% of at least one of CaO, MgO and $WO_3$; and 22 to 44 wt% of at least one of ZnO and SnC; wherein the $Na_2O$ is added in a content amount of 5 to 18wt%, and the $K_2O$ is added in a content amount of 5 to 13wt%

The antibacterial glass composition may further include 0.1wt% or less of at least one of $Ag_2O$, $Ag_3PO_4$ and $AgNO_3$.

[Advantageous Effect]

The present disclosure may have following advantageous effects. According to the present disclosure, the strong glass structure not eluting in water may be formed by strictly controlling each component of a glass composition and participating Zn and Sn ions exhibiting antibacterial performance in a network formation structure, thereby exhibiting antibacterial activity without being eluted in water by controlling a surface charge of glass.

In addition, the present disclosure may be a water insoluble antibacterial agent composed of the multi-purpose antibacterial component, thereby being used permanently when used as a coating material for glass shelves and an additive for plastic injection molded products.

In addition, the present disclosure may be an antibacterial agent exhibiting non-dissolving properties, when used as a coating agent for a group of parts coming into contact with drinking water, thereby exhibiting an excellent effect in preventing contamination of bacteria, mold and the like.

Specific effects are described along with the above-described effects in the section of Detailed Description.

[Brief Description of Drawings]

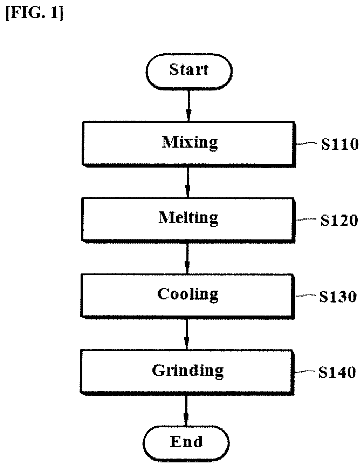

FIG. 1 is a flow chart showing a method of manufacturing antibacterial glass powder according to an embodiment of the present disclosure.

Detailed Description of Exemplary Embodiment]

The above-described aspects, features and advantages are specifically described hereunder with reference to the accompanying drawings. Below, preferred embodiments according to the disclosure are specifically described with reference to the accompanying drawings. In the drawings, identical reference numerals can denote identical or similar components.

The singular forms "a", "an" and "the" are intended to include the plural forms as well, unless explicitly indicated otherwise. It should be further understood that the terms "comprise" or "include" and the like, set forth herein, are not interpreted as necessarily including all the stated components or steps but can be interpreted as excluding some of the stated components or steps or can be interpreted as including additional components or steps.

Hereinafter, an antibacterial glass composition, a method for preparing antibacterial glass powder, and a home appliance including same according several embodiments of the present disclosure will be described

Unlike the conventional elution mechanism, the antibacterial glass composition according to the embodiment of the present disclosure may have an antibacterial action persisting permanently even if the glass does not react with water at all.

In order to take advantage of the fact that an intermediate oxide can act as both a modifying oxide and a mesh forming oxide when forming glass, the glass composition according to the embodiment may help Zn and Sn ions provided to exhibit antibacterial performance to participate in a network forming structure by controlling each component and its component ratio, thereby forming a strong glass structure configured not to elute in water. In addition, the antibacterial glass composition may exhibit antibacterial activity without eluting in water by controlling the surface charge of glass.

As described above, the antibacterial glass composition according to the embodiment may control the Zn and Sn ions eluted to implement the antibacterial function to form the network by using the content ratio of the modifying oxide and the network-forming oxide, thereby achieving the antibacterial activity and water resistance at the same time.

In the mechanism configured to exhibit the antibacterial activity in the present disclosure, the metal ions in glass allow a surface charge of glass, that is, a zeta potential to have a positive charge, so that the positive charge may attract and kill negatively charged bacteria by creating a charged atmosphere in which bacterial cannot grow.

At this time, elements for manufacturing an antibacterial glass composition having excellent durability may be largely divided into two types.

First, it is a glass matrix that determines chemical durability by forming a glass structure. The glass matrix performs a role similar to the role of a carrier provided in a conventional inorganic antibacterial agent, that is, a role of dispersing a material exhibiting the antibacterial properties on the surface.

If there is a difference, the conventional carrier is in the form of supporting an antibacterial component but in the present disclosure, the metal material exhibiting antibacterial properties may be made to exist in the glass substrate in the form of ions. In order to make the glass substrate having excellent durability, not only the content ratio of glass-forming agents (e.g., $SiO_2$ and $B_2O_3$) is important, but it is also a very important factor that the mechanical properties of glass can non-linearly change based on the mixed alkali effect in glass, that is, the ratio of alkali components.

Second, there is the effect of the metal component contained in the glass. In other words, it can be said that the metal component is the main factor for exhibiting the antibacterial performance, and there is a big difference in the antibacterial properties of each component. The optimized design of the composition ratio of antibacterial glass is important, because differences in durability could appear depending on the state of ionic and covalent bonds due to interactions with components in the glass substrate.

To this end, the antibacterial glass composition according to an embodiment of the present disclosure may contain 26 to 50 % by weight (hereinafter, wt%) of $SiO_2$, 0.5 to 4 wt% of at least one of $B_2O_3$ and $P_2O_5$, 15 to 27wt% of at least one of $Na_2O$ and $K_2O$, 3 to 20 wt% of at least one of CaO, MgO and $WO_3$, and 22 to 44 wt% of at least one of ZnO and SnO. ; wherein the $Na_2O$ is added in a content amount of 5 to 18wt%, and the $K_2O$ is added in a content amount of 5 to 13wt%

In addition, the antibacterial glass composition according to the embodiment of the present disclosure may further include 0.1wt% or less of at least one of $Ag_2O$, $Ag_3PO_4$ and $AgNO_3$.

The above-described antibacterial glass composition according to the embodiment of the present disclosure may be a water-insoluble antibacterial agent composed of a multipurpose antibacterial component, and may be used permanently when used as a coating material for glass shelves and an additive for plastic injection products.

In addition, the antibacterial glass composition according to the embodiment of the present disclosure may be an antibacterial agent exhibiting non-dissolving properties, and may exhibit an excellent effect in preventing contamination of bacterial and mold when used as a coating agent for a group of parts that come into contact with driving water.

Hereinafter, the role of each component contained in the antibacterial glass composition and its content will be described in detail.

$SiO_2$, $B_2O_3$ and $P_2O_5$ may be network-forming oxides, which form the frame structure of glass and key components that enable vitrification of covalent bonding

$SiO_2$ is a glass former that enables vitrification, and is a key component that acts as a framework in the structural aspect of glass. When $SiO_2$ is contained more than an appropriate amount, the viscosity may increase during the process of melting glass, and thus workability and yield could be deteriorated in a cooling process. Although not acting as a direct component exhibiting antibacterial activity, $SiO_2$ forms less OH-groups on a glass surface, compared to $P_2O_5$ which is a typical network-forming oxide.

Accordingly, $SiO_2$ is advantageous to positively charge the glass surface caused by metal ions in the glass. $SiO_2$

may be added in a content ratio of 26 to 50 wt% of the antibacterial glass composition according to the present disclosure, and 30 to 36wt% may be a preferable range. When the content amount of $SiO_2$ is less than 26wt%, oxygenation might appear due to the lack of a network-forming oxide leaving the vitrification region, or a heterogeneity phenomenon in which transparent glass is mixed might occur. Conversely, when the added content amount of $SiO_2$ exceeds 50wt%, it could be difficult to control the surface charge of the glass to be a positive value and the antibacterial activity might be deteriorated.

$B_2O_3$ and $P_2O_5$ may be key components that enable sufficient vitrification together with $SiO_2$ as representative network-forming oxides. $B_2O_3$ and $P_2O_5$ have low melting points and are used to lower the eutectic point of the melt. In addition, when they are melted for vitrification, $B_2O_3$ and $P_2O_5$ act to increase the solubility of rigid components (e.g., $Al_2O_3$, $CuO$, etc.), thereby helping to make a homogeneous glass. However, when $B_2O_3$ and $P_2O_5$ are added above a predetermined level, there might be a problem of weakening the bonding structure of the glass to reduce water resistance and the like.

Accordingly, $B_2O_3$ and $P_2O_5$ may be used in trace amounts only for lowering the melting point in order to realize water-insoluble antibacterial glass.

To this end, at least one of $B_2O_3$ and $P_2O_5$ may be added in a content ratio of 0.5 to 4 wt% based on the total weight of the antibacterial glass composition according to the present disclosure. When the content amount of at least one of $B_2O_3$ and $P_2O_5$ is less than 0.5wt%, the flux could be insufficient enough to leave the vitrification region, which might cause unmelting. Conversely, when the content amount of at least one of $B_2O_3$ and $P_2O_5$ exceeds 4wt%, structural problems of B and P in the network-forming structure could cause a decrease in water resistance due to the nature of the element itself.

In the present disclosure, the content amount of $SiO_2$ may be higher than that of $B_2O_3$, because it is advantageous to secure water resistance when the amount of $SiO_2$ added is higher than that of $B_2O_3$.

Alkali oxides such as $Na_2O$ and $K_2O$ are oxides that act as a network molding for non-crosslinking in the glass composition. These components may not be vitrified alone, but vitrification may be possible when mixed with a network former such as $SiO_2$ and $B_2O_3$ in a predetermined ratio. If only one of the $SiO_2$ and $B_2O_3$ components is contained in the glass composition, the durability of the glass might be weakened in the vitrified region. However, if two or more of the $SiO_2$ and $B_2O_3$ components are contained in the glass composition, the durability of the glass may be improved again based on the ratio, which is called the mixed alkali effect.

Accordingly, alkali oxides such as $Na_2O$ and $K_2O$ may improve the antibacterial activity by using the point that they first occupy a modulation oxide site in the glass. In addition, alkali oxides such as $Na_2O$ and $K_2O$ may contribute to the meshes formed by $ZnO$ and $SnO$, which are intermediate oxides, to enhance durability, thereby contributing to the antibacterial activity by surface charge and water insoluble properties.

At least one of $Na_2O$ and $K_2O$ may be added in a content ratio of 15 to 27wt% of the total weight of the antibacterial glass composition according to the presenth disclosure; $Na_2O$ is added in a content amount of 5 to 18wt%, and $K_2O$ is added in a content amount of 5 to 13wt% When the content amount of at least one of $Na_2O$ and $K_2O$ less than 15wt%, the flux could be insufficient enough to leave the vitrification region, which might cause unmelting product. Conversely, when the content amount of at least one of $Na_2O$ and $K_2O$ exceeds 27wt%, alkali ions might be easily replaced with $H_3O^+$ ions of water based on the basic elution mechanism of glass, and the water resistance deterioration phenomenon in which the dissolution is deepened might occur.

In addition, it is also preferred that $Na_2O$ and $K_2O$ are added in a range satisfying the following formula 1:

$$[Formula\ 1] \qquad 0.5 \le [Na_2O] / [K_2O] \le 1.5$$

Here, [] represents the content ratio of each component.

The effect of lowering the melting point through the eutectic point of $Na_2O$-$K_2O$ may fall and virtrification might be escaped outside the range of Formula 1 above.

Alkaline earth oxides such as $CaO$, $MgO$ and $WO_3$ are basic oxides that act as non-crosslinked modifying oxides in glass. These components may not be vitrified alone, but vitrification may be possible when mixed with a network former such as $SiO_2$ and $B_2O_3$ in a predetermined ratio.

Unlike alkali oxides, alkaline earth oxides such as $CaO$, $MgO$ and $WO_3$ have +2 charge and have to be substituted with two water molecule ions, so that ion exchange may be relatively difficult and they may be sometimes used as durability enhancing elements. Therefore, alkaline earth oxides such as $CaO$, $MgO$, and $WO_3$ are used for the same purpose as alkali oxides, which structurally indirectly contribute to the expression of water insolubility and antibacterial properties by occupying the point of strong durability among the modified oxides and the site of the modifying oxide.

At least one of $Cao$, $MgO$ and $WO_3$ may be added in a content ratio of 3 to 20wt% of the total weight of the antibacterial glass composition according to the present disclosure. When at least one of $CaO$, $MgO$ and $WO_3$ is less than 3wt%, the structure cannot be strengthened at a modified oxide site and a water resistance deterioration that cannot prevent alkali elution might occur. Conversely, when at least one of $CaO$, $MgO$ and $WO_3$ exceeds 20wt%, the alkaline earth oxide, which melts at a high temperature, does not sufficiently melt and thus leaves vitrification region, thereby causing the formation of an unmelted material.

ZnO and SnO are components that perform both roles of a network-forming oxide and a modifying oxide by covalent bonding with some part of the network-forming oxide. In addition, ZnO and SnO are components that greatly contribute to the exhibition of the antibacterial effect.

These ZnO and SnO are intermediate oxides. Accordingly, in order to participate in the mesh formation structure in glass, they should have small atomic radius and the electronegativity should be large enough to the different with oxygen to be small. These intermediate oxides may refer to a component having a larger atomic radius and lower electronegativity than Si, P and B, which are conventional network-forming oxides, to make it difficult to form glass alone, but being substituted with the network-forming oxide in the presence of the network-forming oxide to play the role. ZnO and SnO may function only as modifying oxides below a predetermined amount, but they may form a covalent bond in a predetermined amount or more, thereby improving the durability radically. In this instance, the predetermined amount may be determined based on the content amount of the network forming oxide and the modifying oxide.

Accordingly, at least one of ZnO and SnO may be added in a content amount ratio of 22 to 44 wt% of the total weight of the antibacterial glass composition. When the content amount of at least one of ZnO and SnO is less than 22wt%, the absolute amount of the substance exhibiting the antibacterial activity could be insufficient so that there might be a problem in that sufficient antibacterial activity may be exhibited. Conversely, when added in excess of 44wt%, at least one of ZnO and SnO cannot exist as an ionic state in the glass under homogeneity, and it will partially forms crystals to leave the vitrification. Accordingly, oxygenation might appear due to the escape from the vitrification region and a heterogeneity phenomenon in which transparent glass is mixed might occur.

$Ag_2O$, $Ag_3PO_4$ and $AgNO_3$ may exist as ions in the glass and may be effective components to exhibit antibacterial activity. In addition, $Ag_2O$, $Ag_3PO_4$ and $AgNO_3$ may function to lower the melting point. When at least one $Ag_2O$, $Ag_3PO_4$ and $AgNO_3$ is added in excess of 0.1wt%, there is a risk of destabilizing vitrification due to precipitation of silver metal. Accordingly, it is preferred that at least one of $Ag_2O$, $Ag_3PO_4$ and $AgNO_3$ is added in a strictly limited amount of 0.1wt% or less of the total weight of the antibacterial glass composition according to the present disclosure.

Referring to the accompanying drawing, a method of manufacturing antibacterial glass powder according to an embodiment of the present disclosure will be described.

FIG. 1 is a flow chart showing a method of manufacturing antibacterial glass powder according to an embodiment of the present disclosure.

As shown in FIG. 1, the method of manufacturing the antibacterial glass powder may include mixing S110, melting S120, cooling S130 and grinding S140.

**Mixing:**

In the mixing process S110, 26 to 50 wt% of $SiO_2$, 0.5 to 4 wt% of at least one of $B_2O_3$ and $P_2O_5$, 15 to 27 wt% of at least one of $Na_2O$ and $K_2O$, wherein the $Na_2O$ is added in a content amount of 5 to 18wt%, and the $K_2O$ is added in a content amount of 5 to 13wt%, 3 to 20 wt% of at least one of CaO, MgO and $WO_3$, 22 to 44wt% of at least one of ZnO and SnO may be mixed and agitated, to form an antibacterial glass composition.

Here, the content amount of $SiO_2$ may be higher than that of B2O3.

It is preferred to add $Na_2O$ and $K_2O$ in a range which satisfies Formula 1 below.

$$\text{Formula 1:} \qquad 0.5 \leq [Na_2O] / [K_2O] \leq 1.5$$

Here, [] represents the content ratio of each component.

The effect of lowering the melting point through the eutectic point of $Na_2O$-$K_2O$ may fall and virtrification might be escaped outside the range of Formula 1 above.

In addition, the antibacterial glass composition may further include at least one of $Ag_2O$, $Ag_3PO_4$ and $AgNO_3$ in a content amount of 0.1 or more wt%.

**Melting**

In the melting process S120, the antibacterial glass composition may be melted.

In this process, melting may be performed at 1,100 to 1,400 °C for 1 to 60 minutes. If the melting temperature is lower than 1,100°C or the melting time is less than 1 minute, the antibacterial glass composition may be likely not to be melted completely only to cause immiscibility of the glass melt. Conversely, if the melting temperature exceeds 1,400°C or the melting time exceeds 60 minutes, excessive energy and time would required, which is not economical.

**Cooling**

In the cooling process S130, the melted antibacterial glass composition may be cooled to a room temperature.

In this process, cooling may be performed in a furnace cooling method. When air cooling or water cooling is applied, the internal stress of the antibacterial glass might be severely formed and cracks could occur in some cases. Accordingly, the finance cooling method may be preferred.

**Grinding**

In the grinding process S140, the cooled antibacterial glass may be grinded. For the grinding, any one selected from commonly known ball mills, jet mills and planetary mills may be applied.

The antibacterial glass may be grinded into fine antibacterial glass powder, to prepare the antibacterial glass power. the antibacterial glass powder may have an average diameter of $30 \mu$m or more, and an average diameter of 5 to $15 \mu$m may be suggested as a preferable range.

Through the above-described processes S110 to S140, the antibacterial glass powder according to the embodiment of the present disclosure may be prepared.

Meanwhile, a home appliance according to an embodiment may include a resin material and a plastic injection molded material made by adding the antibacterial glass power prepared by the above-described method to the resin material. The home appliance used in the present disclosure may include a water purifier, a washing machine and a stand air conditioner, a system air conditioner, a refrigerator and the like, but is not limited thereto.

Here, the plastic injection molded material may include 95.0 to 99.0 wt% of the resin and 1.0 to 5.0wt% of the antibacterial glass powder.

When the added amount of the antibacterial glass powder is less than 1.0 wt% of the total content amount of the plastic injection molded material, the antibacterial activity against P. aeruginosa might not be sufficient. Conversely, when the added amount of the antibacterial glass composition exceeds 5.0wt% of the total content amount of the plastic injection molded material to be added excessively, there is a possibility that mechanical properties could be deteriorated.

The resin material may include at least one of PP(polypropylene), PC(polycarbonate), EPDM(ethylene propylene rubber), ABS(acrylonitrile-butadiene-styrene) and HIPS (high impact polystyrene)

In this instance, the antibacterial glass powder may include 26 to 50wt% of $SiO_2$, 0.5 to 4wt% of at least one of $B_2O_3$ and $P_2O_5$, 15 to 27wt% of at least one of $Na_2O$ and $K_2O$, 3 to 20wtT of at least one of CaO, MgO and $WO_4$, and 22 to 44wt% of at least one of ZnO and SnC wherein the $Na_2O$ is added in a content amount of 5 to 18wt%, and the $K_2O$ is added in a content amount of 5 to 13wt%.

In addition, it is preferred that $Na_2O$ and $K_2O$ are added in a range satisfying Formula 1 below.

$$Formula\ 1:$$
$$0.5 \leq [Na_2O] / [K_2O] \leq 1.5$$

Here, [] represents the content ratio of each component.

The effect of lowering the melting point through the eutectic point of $Na_2O$-$K_2O$ may fall and virtrification might be escaped outside the range of Formula 1 above.

In addition, the plastic injection molded material may further contain a functional additive rather than the antibacterial glass powder. At this time, the functional additive may include at least one selected from an antioxidant, a forming agent, an impact modifier, a nucleating agent, a coupling agent and the like.

Accordingly, the home appliance according to the embodiment of the present disclosure may have an antibacterial power that prevent inhabitation and growth of various microorganisms, because the antibacterial activity is given to a surface of the home appliance that is vulnerable to bacterial propagation and comes in contact with a lot of moisture.

**Embodiments**

Hereinafter, the configuration and activation of the present disclosure will be described in detail through exemplary embodiments. However, they are presented as preferred examples of the present disclosure and may not be construed as limiting the present disclosure in any sense.

The features not described herewith may be derived by people skilled in the art to which the present disclosure pertains, thereby being omitted.

**1. Manufacturing an antibacterial glass power sample:**

Table 1 shows the composition and the composition ratio of the antibacterial glass composition according to Examples 1 to 10. Table 2 shows the compositions and the composition ratio of the antibacterial glass composition according to Comparative examples 1 to 8. At this time, the antibacterial glass compositions having the compositions disclosed in Examples 1 to 10 and Comparative Examples 1 to 8 are melted at 1,200°C in an electric furnace and then cooled in the form of glass bulk on a stainless steel plate by air cooling. Here, only in Examples 1 to 10 and Comparative Examples 2, 4 and 5, cullet type antibacterial glass is achieved. After that, the antibacterial glass prepared according to Examples 1 to 10 and Comparative Examples 2, 4 and 5 may be grinded by using a ball mill, and then passed through a mesh sieve to prepare an antibacterial glass powder sample.

In this instance, as raw materials for $Na_2O$, $K_2O$ and $CaO$, $Na_2CO_3$, $K_2CO_3$ and $CaCO_3$ are used, respectively, and the other components are the same as those described in Table 1 and Table 2. In addition, vitrification is classified based on homogeneous glassy appearance and opacification and non-melting phenomenon.

[Table 1] (Unit: wt%)

| Classif ication | Examples | | | | | | | | | |
|---|---|---|---|---|---|---|---|---|---|---|
| | 1 | 2 | 3 | 4 | 5 | 6 | 7 | 8 | 9 | 10 |
| $SiO_2$ | 26.0 | 40.0. | 35.1 | 35.0 | 35.1 | 31.0 | 35.1 | 31.0 | 40.0 | 34.0 |
| $P_2O_5$ | - | - | 1.8 | - | - | - | - | - | - | - |
| $B_2O_3$ | 2.0 | 3.8 | - | 3.9 | 2.0 | 2.0 | 2.0 | 2.0 | 3.8 | 1.9 |
| $Na_2O$ | 11.0 | 12.2 | 9.6 | 10.7 | 7.1 | 16.0 | 9.6 | 11.0 | 12.2 | 8.4 |
| $K_2O$ | 11.0 | 6.7 | 9.6 | 8.7 | 9.6 | 11.0 | 9.6 | 11.0 | 6.7 | 8.4 |
| $WO_3$ | - | 4.0 | - | - | - | - | - | - | 4.0 | 4.0 |
| $CaO$ | 10.0 | 11.1 | 8.8 | 9.7 | 8.8 | 5.0 | 4.3 | 20.0 | 11.1 | - |
| $MnO_2$ | - | - | - | - | - | - | - | - | - | - |
| $SnO$ | - | - | 2.0 | 2.9 | - | - | - | - | - | - |
| $ZnO$ | 40.0 | 22.2 | 33.1 | 29.1 | 37.3 | 35.0 | 39.3 | 25.0 | 22.2 | 43.4 |
| Total | 100 | 100 | 100 | 100 | 100 | 100 | 100 | 100 | 100 | 100 |

[Table 2] (unit: wt%)

| Classif ication | Comparative examples | | | | | | | |
|---|---|---|---|---|---|---|---|---|
| | 1 | 2 | 3 | 4 | 5 | 6 | 7 | 8 |
| $SiO_2$ | 25.4 | 53.0 | 36.0 | 35.1 | 26.0 | 31.0 | 26.0 | 35.1 |
| $P_2O_5$ | - | 4.0 | - | - | - | - | - | - |
| $B_2O_3$ | 2.2 | - | - | 6.8 | 2.0 | 2.0 | 1.7 | 2.0 |
| $Na_2O$ | 11.9 | 15.0 | 12.0 | 10.7 | 16.6 | 11.0 | 9.5 | 7.1 |
| $K_2O$ | 11.9 | - | 12.0 | 5.9 | 12.6 | 11.0 | 9.5 | 7.1 |
| $WO_3$ | - | - | - | - | - | - | - | - |
| $CaO$ | 10.8 | 18.0 | 10.0 | 9.8 | 2.8 | 25.0 | 8.6 | 11.3 |
| $MnO_2$ | - | - | - | 12.2 | - | - | - | - |
| $SnO$ | - | - | - | - | - | - | - | - |
| $ZnO$ | 37.8 | 10.0 | 30.0 | 19.5 | 40.0 | 20.0 | 44.7 | 37.3 |
| Total | 100 | 100 | 100 | 100 | 100 | 100 | 100 | 100 |

## 2. Antibacterial glass powder properties evaluation results

Table 3 shows the physical property evaluation results for the samples prepared according to Examples 1 to 10. Table 4 shows the results of evaluation of physical properties for the samples prepared according to Comparative Examples 1 to 8.

1) Antibacterial activity measurement:

For Examples 1 to 10 and Comparative Examples 1, 4 and 5 in which vitrification is homogenously progressed, 4 bacteria (Staphylococcus aureus, Escherichia coil, Klebsiella pneumoniae, Pseudomonas) based on the shaking flask method (ASTM E2149-13a) aeruginosa) is evaluated for antibacterial activity.

2) Chemical durability evaluation:

In order to evaluate the durability of Examples 1 to 10 and Comparative Examples 2, 4, and 5 in which vitrification is performed homogenously, it is evaluated whether the dissolution level for the elements limited in Table 5 below passes WHO guide and domestic drinking water standards through the ASTM C1285-14 (glass and glass-ceramic durability evaluation method) test method. In this instance, the chemical durability is indicated by O when the elution amount for each component listed in Table 5 is less than a reference value at 50°C and 32hours, and indicated by X when the elution amount is higher than the reference value.

[Table 3]

| classification | | Examples | | | | | | | | | |
|---|---|---|---|---|---|---|---|---|---|---|---|
| | | 1 | 2 | 3 | 4 | 5 | 6 | 7 | 8 | 9 | 10 |
| Vitrification (O, X) | | O | O | O | O | O | O | O | O | O | O |
| Antibacterial activity | Staphylococcus aureus | 99.9% | 99.9% | 99.9% | 99.9% | 99.9% | 99.9% | 99.9% | 99.9% | 99.9% | 99.9% |
| | Escherichia coil | 99.9% | 99.9% | 99.9% | 99.9% | 99.9% | 99.9% | 99.9% | 99.9% | 99.9% | 99.9% |
| | Klebsiella pneumoniae | 99.9% | 99.9% | 99.9% | 99.9% | 99.9% | 99.9% | 99.9% | 99.9% | 99.9% | 99.9% |
| | Pseudomonas | 99.9% | 99.9% | 99.9% | 99.9% | 99.9% | 99.9% | 99.9% | 99.9% | 99.9% | 99.9% |
| Chemical durability | | 0 | 0 | 0 | 0 | 0 | 0 | 0 | 0 | 0 | 0 |

**EP 4 180 399 B1**

[Table 4]

| classification | | Example | | | | | | |
|---|---|---|---|---|---|---|---|---|
| | | | | | | | | |
| Vitrification (O, X) | opalescence | O | unmelted | O | O | X Presence of unmelted (heterogeno | X opalesc ence | X Prese nce |
| | | | | | | us) | | of unme lted (hete rogen ous) |
| Anti bacte rial activi ty | Staphylococ cus aureus | - | 47.2 % | - | 60% | 99.9% | - | - | - |
| | Escherichia coil | - | 32.0 % | - | 54.2 % | 99.9% | - | - | - |
| | Klebsiella pneumonia e | - | 29.8 % | - | 52% | 99.9% | - | - | - |
| | Pseudomon as | - | 65.4 % | - | 79.9 % | 99.9% | - | - | - |
| Chemical durability | | - | O | - | X | X | | | |

[Table 5]

| Elution amount | B | Zn | Mn |
|---|---|---|---|
| WHO guide | 2.4 | - | - |
| Domestic drinking water | 1.0 | 3 | 0.05 |

As shown in Table 1 to 5, the samples prepared according to Examples 1 to 10 have the antibacterial activity of 99% or more against all four bacteria.

In contrast, vitrification did not proceed homogenously in Comparative examples 1 to 8 except for Comparative examples 2, 4 and 5.

In addition, the sample prepared according to Comparative example 5 have an antibacterial activity of 99% against all 4 bacteria. However, the sample prepared according to Comparative examples 2 and 4 has an antibacterial activity of 80% or less against all four bacteria.

When using the samples prepared according to Examples 1 to 10, it is confirmed that elution did not occur for B, Zn and Mn components as a result of durability measurement, which indicates excellent chemical durability.

In contrast, elution did not occur in the sample prepared according to Comparative example 2, but elution occurred in the sample prepared according to Comparative examples 4 and 5, resulting in poor chemical durability.

**3. Injection molded product manufacturing**

Table 6 shows the results of evaluating the antibacterial effect of the injection molded product manufactured according to Example 3, Example 7, Comparative example 2 and Comparative example 4. 2wt% of the antibacterial glass powder prepared according to Examples 3 and 7 and Comparative examples 2 and 4 is mixed with 98wt% of PP (Polypropylene) resin. After that, injection molding is performed by using an injection molding machine and injection molded products of 200mm (horizontal), 100mm (length) and 2mm (thickness) are manufactured. At this time, in order to confirm the antibacterial degree of each injection molded product, the antibacterial activity against Staphylococcus aureus and E. coli was measured by ASTM E2149-13a, the shaking flask method. In addition, the antibacterial activity against pneumococcus and Pseudomonas aeruginosa is further evaluated.

11

[Table 6]

| Antibacterial activity (JIS Z 2801, Film adhesion method) | Example 3 | Example 7 | Comparative example 2 | Comparative example 4 |
|---|---|---|---|---|
| Staphylococcus aureus | 99.99% | 99.99% | 49.1% | 59.8% |
| Escherichia coil | 99.99% | 99.99% | 39.6% | 55.6% |
| Klebsiella pneumonia | 99.99% | 99.99% | 31.2% | 52.1% |
| Pseudomonas aeruginosa | 99.99% | 99.99% | 63.1% | 76.3% |

As shown in Table 6, the injection molded products manufactured according to Examples 3 and 7 are measured to have an antibacterial activity value of 2.0 or higher, which confirms that they exhibit an antibacterial activity of 99% or higher.

In contrast, the injection molded products manufactured according to Comparative examples 2 and 4 are measured to have an antibacterial activity value of less than 2.0, which confirms that they exhibit an antibacterial activity of 80% or lower.

As seen based on the above-described experimental results, it is confirmed that the injection molded products manufactured according to Examples 3 and 7 exhibit excellent antibacterial activity, compared to the injection molded products manufactured according to Comparative examples 2 and 4.

The embodiments are described above with reference to a number of illustrative embodiments thereof. However, the present disclosure is not intended to limit the embodiments and drawings set forth herein, and numerous other modifications and embodiments can be devised by one skilled in the art. Further, the effects and predictable effects based on the configurations in the disclosure are to be included within the range of the disclosure though not explicitly described in the description of the embodiments.

**[Description of Reference Numerals]**

S110 : Mixing
S120 : Melting
S130 : Cooling
S140 : Grinding

**Claims**

1.  An antibacterial glass composition comprising:

    26 to 50 wt% of $SiO_2$;
    0.5 to 4 wt% of at least one of $B_2O_3$ and $P_2O_5$;
    15 to 27 wt% of at least one of $Na_2O$ and $K_2O$;
    3 to 20 wt% of at least one of CaO, MgO and $WO_3$; and
    22 to 44 wt% of at least one of ZnO and SnO;
    wherein the $Na_2O$ is added in a content amount of 5 to 18wt%, and the $K_2O$ is added in a content amount of 5 to 13wt%.

2.  The antibacterial glass composition of claim 1, wherein the content amount of the $SiO_2$ is greater than that of the $B_2O_3$.

3.  The antibacterial glass composition of claim 2, wherein the $SiO_2$ is added in a content amount of 30 to 36wt%.

4.  The antibacterial glass composition of claim 1, wherein the $Na_2O$ and the $K_2O$ are added in a content range satisfying Formula 1 below.

    Formula 1:            $0.5 \leq [Na_2O] / [K_2O] \leq 1.5$

    (here, [] represents a content ratio of each component)

5. The antibacterial glass composition of claim 1, further comprising:
0.1wt% or less of at least one of $Ag_2O$, $Ag_3PO_4$ and $AgNO_3$.

6. A method of manufacturing antibacterial glass powder comprising:

   (a) mixing and agitating 26 to 50 wt% of $SiO_2$, 0.5 to 4 wt% of at least one of $B_2O_3$ and $P_2O_5$, 15 to 27 wt% of at least one of $Na_2O$ and $K_2O$, 3 to 20 wt% of at least one of CaO, MgO and $WO_3$, and 22 to 44 wt% of at least one of ZnO and SnO, and wherein the $Na_2O$ is added in a content amount of 5 to 18wt%, and the $K_2O$ is added in a content amount of 5 to 13wt%, to form an antibacterial glass composition;
   (b) melting the antibacterial glass composition;
   (c) cooling the melted antibacterial glass composition; and
   (d) grinding the cooled antibacterial glass.

7. The method of manufacturing the antibacterial glass powder of claim 6, wherein in (a), the content amount of the $SiO_2$ is greater than that of the $B_2O_3$.

8. The method of manufacturing the antibacterial glass powder of claim 7, wherein the $SiO_2$ is added in a content amount of 30 to 36wt%.

9. The method of manufacturing the antibacterial glass powder of claim 6, wherein in (a), the antibacterial glass composition further comprises 0.1wt% or less of at least one of $Ag_2O$, $Ag_3PO_4$ and $AgNO_3$.

10. The method of manufacturing the antibacterial glass powder of claim 6, wherein in (b), the melting is performed at 1,100 to 1,400 °C for 1 to 60 minutes.

11. A home appliance comprising:

    a plastic injection molded material in which antibacterial glass powder is added to a resin material,
    wherein the plastic injection molded material includes
    95.0 to 99.0 wt% of the resin material; and
    1.0 to 5.0 wt% of the antibacterial glass powder, and
    the antibacterial glass powder includes 26 to 50 wt% of $SiO_2$, 0.5 to 4 wt% of at least one of $B_2O_3$ and $P_2O_5$, 15 to 27 wt% of at least one of $Na_2O$ and $K_2O$, 3 to 20 wt% of at least one of CaO, MgO and $WO_3$, and 22 to 44 wt% of at least one of ZnO and SnO, and wherein the $Na_2O$ is added in a content amount of 5 to 18wt%, and the $K_2O$ is added in a content amount of 5 to 13wt%.

12. The home appliance of claim 11, wherein the resin material includes at least one of PP(polypropylene), PC(polycarbonate), EPDM(ethylene propylene rubber), ABS(acrylonitrile-butadiene-styrene) and HIPS(high impact polystyrene).

13. The home appliance of claim 11, wherein the $Na_2O$ and the $K_2O$ are added in a content range satisfying Formula 1 below.

    Formula 1:    $0.5 \leq [Na_2O] / [K_2O] \leq 1.5$

    (here, [] represents a content ratio of each component)

**Patentansprüche**

1. Eine antibakterielle Glaszusammensetzung, umfassend:

   26 bis 50 Gew.-% $SiO_2$;
   0,5 bis 4 Gew.-% von mindestens einem aus $B_2O_3$ und $P_2O_5$;
   15 bis 27 Gew.-% von mindestens einem aus $Na_2O$ und $K_2O$;
   3 bis 20 Gew.-% von mindestens einem aus CaO, MgO und $WO_3$; und
   22 bis 44 Gew.-% von mindestens einem aus ZnO und SnO;
   wobei das $Na_2O$ in einer Gehaltsmenge von 5 bis 18 Gew.-% zugegeben ist, und das $K_2O$ in einer Gehaltsmenge

von 5 bis 13 Gew.-% zugegeben ist.

2. Die antibakterielle Glaszusammensetzung gemäß Anspruch 1, wobei die Gehaltsmenge von $SiO_2$ größer ist als die von $B_2O_3$.

3. Die antibakterielle Glaszusammensetzung gemäß Anspruch 2, wobei das $SiO_2$ in einer Gehaltsmenge von 30 bis 36 Gew.-% zugegeben ist.

4. Die antibakterielle Glaszusammensetzung gemäß Anspruch 1, wobei das $Na_2O$ und das $K_2O$ in einem Gehaltsbereich zugegeben sind, der die untenstehende Formel 1 erfüllt.

$$\text{Formel 1:} \qquad 0,5 \leq [Na_2O] / [K_2O] \leq 1,5$$

(hier stellt [] den Gehaltsanteil jeder Komponente dar)

5. Die antibakterielle Glaszusammensetzung gemäß Anspruch 1, ferner umfassend:
0,1 Gew.-% oder weniger von mindestens einem aus $Ag_2O$, $Ag_3PO_4$ und $AgNO_3$.

6. Ein Verfahren zur Herstellung von antibakteriellem Glaspulver, umfassend:

(a) Mischen und Rühren von 26 bis 50 Gew.-% $SiO_2$, 0,5 bis 4 Gew.-% von mindestens einem aus $B_2O_3$ und $P_2O_5$, 15 bis 27 Gew.-% von mindestens einem aus $Na_2O$ und $K_2O$, 3 bis 20 Gew.-% von mindestens einem aus CaO, MgO und $WO_3$ und 22 bis 44 Gew.-% von mindestens einem aus ZnO und SnO, und wobei das $Na_2O$ in einer Gehaltsmenge von 5 bis 18 Gew.-% zugegeben wird, und das $K_2O$ in einer Gehaltsmenge von 5 bis 13 Gew.-% zugegeben wird, um eine antibakterielle Glaszusammensetzung zu bilden;
(b) Schmelzen der antibakteriellen Glaszusammensetzung;
(c) Abkühlen der geschmolzenen antibakteriellen Glaszusammensetzung; und
(d) Mahlen des abgekühlten antibakteriellen Glases.

7. Das Verfahren zur Herstellung des antibakteriellen Glaspulvers gemäß Anspruch 6, wobei in (a) die Gehaltsmenge von $SiO_2$ größer ist als die von $B_2O_3$.

8. Das Verfahren zur Herstellung des antibakteriellen Glaspulvers gemäß Anspruch 7, wobei das $SiO_2$ in einer Gehaltsmenge von 30 bis 36 Gew.-% zugegeben wird.

9. Das Verfahren zur Herstellung des antibakteriellen Glaspulvers gemäß Anspruch 6, wobei in (a) die antibakterielle Glaszusammensetzung ferner 0,1 Gew.-% oder weniger von mindestens einem aus $Ag_2O$, $Ag_3PO_4$ und $AgNO_3$ umfasst.

10. Das Verfahren zur Herstellung des antibakteriellen Glaspulvers gemäß Anspruch 6, wobei in (b) das Schmelzen bei 1.100 bis 1.400 °C für 1 bis 60 Minuten durchgeführt wird.

11. Ein Haushaltsgerät, umfassend:

ein Kunststoffspritzgussmaterial, in dem antibakterielles Glaspulver einem Harzmaterial zugegeben ist, wobei das Kunststoffspritzgussmaterial
95,0 bis 99,0 Gew.-% des Harzmaterials; und
1,0 bis 5,0 Gew.-% des antibakteriellen Glaspulvers beinhaltet, und
das antibakterielle Glaspulver 26 bis 50 Gew.-% $SiO_2$, 0,5 bis 4 Gew.-% von mindestens einem aus $B_2O_3$ und $P_2O_5$, 15 bis 27 Gew.-% von mindestens einem aus $Na_2O$ und $K_2O$, 3 bis 20 Gew.-% von mindestens einem aus CaO, MgO und $WO_3$ und 22 bis 44 Gew.-% von mindestens einem aus ZnO und SnO beinhaltet, und wobei das $Na_2O$ in einer Gehaltsmenge von 5 bis 18 Gew.-% zugegeben ist und das $K_2O$ in einer Gehaltsmenge von 5 bis 13 Gew.-% zugegeben ist.

12. Das Haushaltsgerät gemäß Anspruch 11, wobei das Harzmaterial mindestens eines aus PP (Polypropylen), PC (Polycarbonat), EPDM (Ethylen-Propylen-Kautschuk), ABS (Acrylnitril-Butadien-Styrol) und HIPS (hochschlagfestes Polystyrol) beinhaltet.

**13.** Das Haushaltsgerät gemäß Anspruch 11, wobei das $Na_2O$ und das $K_2O$ in einem Gehaltsbereich zugegeben sind, der die untenstehende Formel 1 erfüllt.

$$\text{Formel 1:} \qquad 0,5 \leq [Na_2O] / [K_2O] \leq 1,5$$

(hier stellt [] den Gehaltsanteil jeder Komponente dar)

**Revendications**

**1.** Composition de verre antibactérien comprenant :

26 à 50 % en poids de $SiO_2$ ;
0,5 à 4 % en poids d'au moins un élément parmi $B_2O_3$ et $P_2O_5$ ;
15 à 27 % en poids d'au moins un élément parmi $Na_2O$ et $K_2O$ ;
3 à 20 % en poids d'au moins un élément parmi CaO, MgO et $WO_3$ ; et
22 à 44 % en poids d'au moins un élément parmi ZnO et SnO ;
dans laquelle le $Na_2O$ est ajouté en une teneur de 5 à 18 % en poids et le $K_2O$ est ajouté en une teneur de 5 à 13 % en poids.

**2.** Composition de verre antibactérien selon la revendication 1, dans laquelle la teneur en $SiO_2$ est supérieure à celle en $B_2O_3$.

**3.** Composition de verre antibactérien selon la revendication 2, dans laquelle le $SiO_2$ est ajouté en une teneur de 30 à 36 % en poids.

**4.** Composition de verre antibactérien selon la revendication 1, dans laquelle le $Na_2O$ et le $K_2O$ sont ajoutés en une plage de teneur satisfaisant la formule 1 ci-dessous.

$$\text{Formule 1 :} \qquad 0,5 \leq [Na_2O] / [K_2O] \leq 1,5$$

(ici, [ ] représente la proportion en teneur de chaque composant).

**5.** Composition de verre antibactérien selon la revendication 1, comprenant en outre :
0,1 % en poids ou moins d'au moins un élément parmi $Ag_2O$, $Ag_3PO_4$ et $AgNO_3$.

**6.** Méthode de fabrication d'une poudre de verre antibactérien comprenant :

(a) le mélange et l'agitation de 26 à 50 % en poids de $SiO_2$, 0,5 à 4 % en poids d'au moins un élément parmi $B_2O_3$ et $P_2O_5$, 15 à 27 % en poids d'au moins un élément parmi $Na_2O$ et $K_2O$, 3 à 20 % en poids d'au moins un élément parmi CaO, MgO et $WO_3$, et 22 à 44 % en poids d'au moins un élément parmi ZnO et SnO, et où le $Na_2O$ est ajouté en une teneur de 5 à 18 % en poids, et le $K_2O$ est ajouté en une teneur de 5 à 13 % en poids, pour former une composition de verre antibactérien ;
(b) la fusion de la composition de verre antibactérien ;
(c) le refroidissement de la composition fondue de verre antibactérien ; et
(d) le broyage du verre antibactérien refroidi.

**7.** Méthode de fabrication de la poudre de verre antibactérien selon la revendication 6, dans laquelle, au (a), la teneur en $SiO_2$ est supérieure à celle en $B_2O_3$.

**8.** Méthode de fabrication de la poudre de verre antibactérien selon la revendication 7, dans laquelle le $SiO_2$ est ajouté en une teneur de 30 à 36 % en poids.

**9.** Méthode de fabrication de la poudre de verre antibactérien selon la revendication 6, dans laquelle, au (a), la composition de verre antibactérien comprend en outre 0,1 % en poids ou moins d'au moins un élément parmi $Ag_2O$, $Ag_3PO_4$ et $AgNO_3$.

**10.** Méthode de fabrication de la poudre de verre antibactérien selon la revendication 6, dans laquelle, au (b), la fusion est réalisée à une température de 1100 à 1400°C pendant 1 à 60 minutes.

11. Appareil électroménager comprenant :

un matériau moulé par injection de plastique dans lequel une poudre de verre antibactérien est ajoutée à un matériau de résine,
où le matériau moulé par injection de plastique comprend
95,0 à 99,0 % en poids du matériau de résine ; et
1,0 à 5,0 % en poids de la poudre de verre antibactérien, et
la poudre de verre antibactérien comprend 26 à 50 % en poids de $SiO_2$, 0,5 à 4 % en poids d'au moins un élément parmi $B_2O_3$ et $P_2O_5$, 15 à 27 % en poids d'au moins un élément parmi $Na_2O$ et $K_2O$, 3 à 20 % en poids d'au moins un élément parmi CaO, MgO et $WO_3$, et 22 à 44 % en poids d'au moins un élément parmi ZnO et SnO, et où le $Na_2O$ est ajouté en une teneur de 5 à 18 % en poids, et le $K_2O$ est ajouté en une teneur de 5 à 13 % en poids.

12. Appareil électroménager selon la revendication 11, dans lequel le matériau de résine comprend au moins un élément parmi le PP (polypropylène), le PC (polycarbonate), l'EPDM (caoutchouc d'éthylène - propylène), l'ABS (acrylonitrile - butadiène - styrène) et l'HIPS (polystyrène à résistance aux chocs élevée).

13. Appareil électroménager selon la revendication 11, dans lequel le $Na_2O$ et le $K_2O$ sont ajoutés en une plage de teneur satisfaisant la formule 1 ci-dessous.

Formule 1 :     $0,5 \leq [Na_2O] / [K_2O] \leq 1,5$

(ici, [ ] représente la proportion en teneur de chaque composant).

[FIG. 1]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10343952 B2
- JP 2002037643 A

- KR 1020050022510